# EUROPÄISCHE PATENTSCHRIFT

(11) **EP 3 333 330 B1**
(45) Veröffentlichungstag und Bekanntmachung des Hinweises auf die Patenterteilung: **31.07.2019**
(21) Anmeldenummer: 16202792.4
(22) Anmeldetag: 07.12.2016
(51) Int. Cl.: E04B 1/00, E04B 2/00, G08C 17/02, E04B 1/76, G01K 13/00, H04Q 9/00

(54) **HYGROTHERMISCHE SENSORVORRICHTUNG FÜR EIN GEBÄUDEHÜLLEN-DÄMMSYSTEM**
HYGROTHERMAL SENSOR DEVICE FOR A BUILDING ENVELOPE INSULATION SYSTEM
DISPOSITIF DE DÉTECTION HYGROTHERMIQUE POUR UN SYSTÈME ISOLANT D'ENVELOPPE DE BÂTIMENT

(43) Veröffentlichungstag der Anmeldung: 13.06.2018
(73) Patentinhaber: DAW SE, 64372 Ober-Ramstadt (DE)
(72) Erfinder: Kramberger, Helge Dr., 64297 Darmstadt (DE); Bishara, Ayman Dr., 01069 Dresden (DE)
(74) Vertreter: Metten, Karl-Heinz

(56) Entgegenhaltungen:
- EP-A1- 2 392 905
- WO-A1-2012/095550
- DE-A1- 3 411 306
- DE-A1-102006 042 426
- KR-B1- 101 486 652

## Beschreibung

Die Erfindung betrifft eine hygrothermische Sensorvorrichtung, zum Erfassen von Luftfeuchte- und/oder Temperatur-Messdaten in einem Gebäudehüllen-Dämmsystem, wie einem Wärmedämmverbundsystem (WDVS), einem Innendämmsystem (IDS) oder einem Dachdämmsystem.

Zur Verbesserung der Energieeffizienz von Gebäuden ist es bekannt, Neubauten mit Gebäudehüllen-Dämmsystemen auszustatten oder Bestandsbauten mit Gebäudehüllen-Dämmsystemen nachzurüsten. Üblicherweise werden Gebäudehüllen-Dämmsysteme als sogenannte Wärmedämmverbundsysteme (WDVS) mit Gebäudewand-außenseitiger Dämmschicht oder als sogenannte Innendämmsysteme (IDS) mit Gebäudewandinnenseitiger Dämmschicht realisiert. Für die Gebäudebedachung werden Dachdämmsysteme verwendet. Im Allgemeinen wird die äußere Gebäudehülle, also Gebäudeaußenwandabschnitte und/oder Gebäudedachabschnitte, mit einem Dämmsystem ausgestattet.

Abhängig von der Gebäude-Innentemperatur und der Außentemperatur stellt sich über einen Wand- und/oder Dachaufbau eines Gebäudes mit einem Gebäudehüllen-Dämmsystem ein Temperatur-Gefälle ein. Gleichzeitig stellt sich über den Verlauf des Gebäudehüllen-Dämmsystems witterungsabhängig ein Verlauf der relativen Luftfeuchte ein. Wenn die relative Luftfeuchte den temperaturabhängigen Taupunkt in dem Gebäudehüllen-Dämmsystem überschreitet, fällt an dieser Stelle Kondenswasser aus. Zusätzlich kann beispielsweise infolge von Rissen Feuchtigkeit, etwas infolge von Niederschlägen, in ein Gebäudehüllen-Dämmsystem eindringen und auf diese Weise den Feuchte-Verlauf beeinflussen. Wasser innerhalb eines Gebäudehüllen-Dämmsystems kann zu sogenannten hygrothermischen Bauschäden führen, darunter fallen Algen, Schimmelpilze und Kondensat. Häufige Ursachen für hygrothermische Schäden liegen in falschem Benutzerverhalten oder in mangelhafter Planung und/oder unsachgemäßer Montage eines Gebäudehülien-Dämmsystems.

Zum Erfassen hygrothermischer Parameter eines Gebäudes ist es bekannt, nachträglich, beispielsweise mittels Bohrungen, kabelgebundene Sensoren in ein Gebäudehüllen-Dämmsystem einzubringen, um den hygrothermischen Zustand des Gebäudes zu erfassen. Die beim Einbringen der Sensoren der Struktur des Gebäudehüllen-Dämmsystems zugefügten Schäden sind insofern höchst problematisch als sie Wärmebrücken und zusätzliche Eindringmöglichkeiten für Wasser erzeugen. Ferner ist mit solchen nachträglich eingebrachten Sensoren eine Vorbeugung gegen hygrothermische Schäden nur schlecht möglich. Da die Behebung (Sanierung) hygrothermischer Schäden regelmäßig sehr aufwendig und mit hohen Kosten verbunden ist, erscheint es wünschenswert, kritische hygrothermische Fehlstellen bereits frühzeitig zu erkennen und das Schadensausmaß auf ein Minimum zu reduzieren, um anfallende Sanierungskosten erheblich senken zu können. Es besteht daher der Wunsch nach einer vorbeugenden, kabellosen Möglichkeit zur Erfassung von hygrothermischen Zustandsdaten an einer Gebäudehüllen-Dämmstruktur zur Überprüfung der Funktionsfähigkeit der Dämmstruktur.

Von DE 10 2006 042 426 A1 ist eine Vorrichtung zur berührungslosen Kontrolle von Vakuumdämmplatten mittels RFID-Technik bekannt. Dabei kann der Zustand der folienumhüllten Vakuumdämmplatten mithilfe von RFID-Technik berührungslos von außen gemessen werden. DE 10 2005 016 030 B4 beschreibt ein Dämmmaterial für Rohrleitungen, die zur Wärme- und/oder Körperschalldämmung in gebäudeverlegten medienführenden Rohrleitungen verwendet werden. Gemäß DE 10 2005 016 030 B4 werden aktive und/oder passive Daten-Transponder in das Dämmmaterial integriert und können bezüglich spezifischer Kenndaten für das Dämmmaterial und/oder den Leitungszustand und/oder den Leitungsverlauf abgefragt werden. Die in DE 10 2006 042 426 A1 und DE 10 2005 016 030 B4 beschriebenen Systeme erlauben es zwar Aussagen über Dämmmaterial zu treffen jedoch keine zum hygrothermischen Zustand einer Gebäudewand-Dämmstruktur.

Die WO 2012/095550 offenbart ein Verfahren zur Überwachung des Zustands einer Gebäudestruktur, wobei das Verfahren einen Schritt zur Bestimmung einer ersten Temperaturinformation eines ersten Temperatursensors umfasst. Diese Temperaturinformation wird mit einem zweiten Temperatursensor abgeglichen, um einen ungewöhnlichen Zustand festzustellen. Hier ist der erste Sensor innerhalb der Gebäudestruktur angeordnet und stellt einen RFID-Transponder dar.

EP 2 392 905 A1 offenbart eine Zustandsmanagementvorrichtung, um die Inspektion einer Struktur zu erleichtern, beispielsweise in Übereinstimmung mit einer zustandsbasierten Wartungsstrategie. Die Zustandsmanagementvorrichtung kann eine Radiofrequenzidentifikationsmarkierung (RFID-Tag) und mindestens eine Erfassungsleitung umfassen, die kommunikationsfähig mit der RFID-Markierung gekoppelt und so ausgebildet ist, dass sie sich zumindest teilweise entlang eines Werkstücks erstreckt. Die Erfassungsleitung kann abhängig von dem Untersuchungsziel aus verschiedenen Materialien gebildet sein. Das RFID-Etikett kann eine Verarbeitungsschaltung und eine Antenne enthalten, die konfiguriert sind, um die Kommunikation außerhalb eines Flugzeugs zu ermöglichen.

KR 101 486 652 B1 offenbart ein multifunktionales elektronisches Vermessungssteuerpunktsystem, das an einem Ort freistehend installiert werden kann, und einen elektronischen Vermessungskontrollpunktverwaltungsserver, der Daten empfängt. Eine zugehörige elektronische Vermessungssteuerpunkt-Bereitstellungsvorrichtung umfasst einen Hauptkörper, von dem mindestens ein Teil in dem Boden des besagten Ortes vergraben ist; ein Leistungsmodul mit einer Solarzelle zum Liefern von selbst erzeugter Energie an die elektronische Vermessungssteuerpunkt-Bereitstellungsvorrichtung; ein GPS-Modul, das zum Messen von Koordinaten des Vermessungspunkts konfiguriert ist; ein Gyrosensormodul, das konfiguriert ist, um eine Winkelgeschwindigkeit gemäß einem topographischen oder einem geologischen Ereignis zu messen; ein RFID-Etikett und ein QR-Code, in den eine eindeutige ID der elektronischen Vermessungssteuerpunkt-Bereitstellungsvorrichtung und Vermessungssteuerpunkt-Information des Vermessungspunkts eingegeben werden; ein Umgebungssensormodul, das konfiguriert ist zum Messen von Umgebungswerten einschließlich einer Temperatur und Feuchtigkeit um die elektronische Vermessungssteuerpunktbereitstellungsvorrichtung herum; ein drahtloses Kommunikationsmodul für drahtlose Datenkommunikation mit der elektronischen Vermessungssteuerpunkt-Bereitstellungsvorrichtung; und ein Steuermodul, das mit den Komponenten verbunden ist, um die Zufuhr von elektrischem Strom zu steuern.

Es ist eine Aufgabe, die Nachteile des Stands der Technik zu überwinden und insbesondere eine Sensorvorrichtung bereitzustellen zum Erfassen von Luftfeuchte- und Temperatur-Messdaten in einem Gebäude-Dämmsystem, welches ohne Einbringen zusätzlicher Fehlstellen in ein Gebäude-Dämmsystem verwendet werden kann und das eine präzise Erfassung von hygrothermischen Zustandsdaten eines Gebäudehüllen-Dämmsystems erlaubt.

Diese Aufgabe wird gelöst durch die hygrothermische Sensorvorrichtung nach Anspruch 1.

In einer zweckmäßigen Ausgestaltung weist die Tragstruktur einen Tragekorpus auf mit einer Außenkontur, von der der Sensorkopfabschnitt hervorsteht. Die Tragstruktur umfasst hierbei den Tragekorpus und den hervorstehenden Sensorkopfabschnitt. Hierbei kann der Tragkorpus beispielsweise einen halbkugelförmigen, ellipsoidförmigen, halbellipsoidförmigen, würfelförmigen, quaderförmigen oder plattenförmigen Korpus umfassen. In anderen Worten der Tragekorpus kann sowohl eine dreidimensionale wie auch eine quasizweidimensionale, d.h. flächige Struktur ausbilden. In einer bevorzugten Ausführungsform kann dabei vorgesehen sein, dass die Tragstruktur einen Tragekorpus, insbesondere eine Trägerplatte, wie eine Platine, aufweist, der/die eine polygonale, vorzugsweise rechteckige, Außenkontur besitzt oder umfasst. Hierbei kann vorteilhafter Weise die Funkelektronik zumindest teilweise auf oder an dem Tragekorpus, insbesondere der Trägerplatte, angeordnet sein. Besonders bevorzugt steht der Sensorkopfabschnitt seitlich von der Außenkontur der Trägerplatte hervor.

Demnach ist eine hygrothermische Sensor-Vorrichtung zum Erfassen von Luftfeuchte- und Temperatur-Messdaten in einem Gebäudehüllen-Dämmsystem, wie ein Wärmedämmverbundsystem (WDVS), ein Innendämmsystem (IDS) oder dergleichen vorgesehen. Die erfindungsgemäße Sensorvorrichtung umfasst einen Temperatursensor und/oder einen Feuchtesensor, vorzugsweise zur Messung der relativen Luftfeuchte, sowie eine Funkelektronik, wie eine RFID-Transponder-Elektronik, zum Übermitteln von Sensordaten an ein Lesegerät, wie ein RFID-Lesegerät, und eine den Temperatur- und/oder Feuchtesensor und die Funkelektronik, insbesondere die RFID-Transponder-Elektronik, tragende Struktur zum Einbetten in das Gebäude-Dämmsystem. Vorzugsweise sind der Temperatursensor und der Feuchtsensor als Bauteileinheit bzw. kombinierter Temperatur- und Feuchtesensor realisiert. Die Funkelektronik, insbesondere die RFID-Transponder-Elektronik, kann vorzugsweise einen Mikrochip oder Mikroprozessor zum Abspeichern und/oder Verarbeiten von Daten, insbesondere Sensordaten, und/oder eine (RFID-)Sende- und/oder Empfangsantenne, vorzugsweise eine Antennenspule, umfassen. Es sei klar, dass die Funkelektronik elektrisch mit dem Temperatursensor und/oder dem Feuchtesensor verbunden ist. Die Sensorvorrichtung umfasst weiterhin einen Drucksensor. Die Funkelektronik kann aktiv, mit integrierter Energiequelle, oder passiv, ohne eigene integrierte Energiequelle, ausgestaltet sein. Passive Funkelektronik, insbesondere passive RFID-Transponder-Elektronik, verwendet vorzugsweise zur Durchführung ihrer elektrischen Funktionen Energie, die über ein Funk- bzw. Magnetfeld mithilfe der (RFID-) Empfangsantenne oder einer Aufladeantenne empfangen wird, vorzugsweise induzierte Energie. Indem zur Übermittlung von Sensordaten, also insbesondere Temperatur-Messdaten und Feuchte-Messdaten, eine Funkelektronik, wie eine RFID-Transponder-Elektronik, bereitgestellt ist, kann die Sensorvorrichtung bei Errichtung eines Neubaus oder Nachrüstung eines Altbaus mit einem Gebäude-Dämmsystem einfach mit einer hygrothermischen Sensorvorrichtung ausgestattet werden, die Sensordaten kabellos übertragen kann. Die Gebäudehüllen-Dämmsystem-Struktur braucht dann weder für das Einbringen von Sensoren noch für eine Signal-KabelVerbindung der Sensoren mit Fehlstellen versehen werden. Die erfindungsgemäße hygrothermische Funksensorvorrichtung erlaubt ferner eine vorbeugende und kontinuierliche Überwachung einer Gebäudehüllen-Dämmstruktur auf ihren hygrothermischen Zustand, sodass kritische Stellen, beispielsweise infolge von Schäden an der Gebäudehüllen-Dämmstruktur, fehlerhaftes Nutzerverhalten oder fehlerhafte Dämmsystem-Montage, frühzeitig erkannt werden können und Sanierungsmaßnahmen bzw. eine Einwirkung auf das Nutzerverhalten frühzeitig eingeleitet werden können.

Erfindungsgemäß weist die Tragstruktur der Sensorvorrichtung einen vorzugsweise seitlich hervorstehenden Sensorkopfabschnitt auf, an dem der Temperatur- und/oder Feuchte-Sensor angeordnet ist. Indem der Temperatur- und/oder Feuchte-Sensor und der Drucksensor vorzugsweise gesondert von der Funkelektronik, insbesondere der RFID-Transponder-Elektronik, als ein oder an einem hervorstehenden oder hervorragenden Kopfabschnitt der Sensor-Tragstruktur realisiert ist, ist eine besonders präzise und durch die Tragstruktur sowie darauf befestigte Funkelektronik nicht oder nur geringfügig beeinträchtige Temperaturmessung und/oder Luftfeuchte-Messung möglich. Es ist auch denkbar, wenigstens eine erfindungsgemäße Sensorvorrichtung oder zumindest deren jeweiligen Sensorkopfabschnitt derart in einem Gebäudeinnenraum vorzusehen, um das Innenraumklima, insbesondere Raumlufttemperatur und/oder relative Raumluftfeuchte, zu messen. Eine solche Sensorvorrichtung kann signalübertragungsgemäß, insbesondere mittels der Funkelektronik, insbesondere der RFID-Transponder-Elektronik, mit einer Heiz- oder Klimaanlage gekoppelt sein, um Temperatur- und/oder Feuchtemesswerte zur Heiz- oder Klimaanlagensteuerung bereitzustellen. So kann die erfindungsgemäße Sensorvorrichtung zur Steuerung und/oder Regelung eines behaglichen (Wohn-)Raumklimas dienen.

Gemäß einer bevorzugten Ausführung einer erfindungsgemäßen Sensorvorrichtung weist die Tragstruktur eine Trägerplatte, wie eine Platine, auf, die eine polygonale Außenkontur hat. Die polygonale Außenkontur der Trägerplatte kann vorzugsweise rechteckig, insbesondere quadratisch oder mit einer langen und einer kurzen Kantenlänge ausgelegt sein. Die Funkelektronik, insbesondere die RFID-Transponder-Elektronik, ist zumindest teilweise, vorzugsweise vollständig, auf der Trägerplatte angeordnet. Vorzugsweise ragt der Sensorkopfabschnitt seitlich, insbesondere an einer kurzen Rechteckseitenkante, von der Außenkontur der Trägerplatte hervor. Der Temperatursensor, der Feuchtesensor und/oder ein anderer Sensor ist vorzugsweise auf dem Sensorkopfabschnitt mit einem ein Abstand von wenigstens 0,5 mm, wenigstens 1,0 mm, wenigstens 2,0 mm oder wenigstens 3,0 mm zu der insbesondere umhüllten Trägerplatte angeordnet. Es sei klar, dass die Seitenkanten sich zwisehen den Ecken geradlinig oder gekrümmt erstrecken können. Die Ecken der polygonalen, vorzugsweise rechteckigen, Außenkontur können einen abgerundeten Übergang zwischen benachbarten Seitenkanten bilden. Ein Übergang zwischen zwei benachbarten Seitenkanten der polygonalen Außenkontur kann beispielsweise einen Krümmungsradius aufweisen, insbesondere zwischen 0,5 mm und 10 mm. Die kurze Seitenkante einer rechteckigen Trägerplatte kann zwischen 2 cm und 6 cm, insbesondere bei etwa 4 cm liegen. Die Länge der langen Seitenkante einer rechteckigen Außenkontur kann zwischen 6 cm und 10 cm, insbesondere bei etwa 8 cm liegen. Der Sensorkopfabschnitt kann vorzugsweise an der Mitte einer insbesondere kurzen Seitenkante der polygonalen Außenkontur angeordnet sein. Der Sensorkopfabschnitt kann positionsveränderbar, insbesondere beweglich, an der Trägerplatte angeordnet sein, beispielsweise mit einer schienen- oder schwalbenschwanzartigen Führung, einer lösbaren Steckverbindung, einem Scharnier oder dergleichen. Vorzugsweise ist der Sensorkopfabschnitt dauerhaft ortsfest mit der Trägerplatte verbunden. Vorzugsweise kann der der Kopfabschnitt eine Fläche von 0,1 cm² bis 4 cm², vorzugsweise 0,2 cm² bis 1,5 cm², besonders bevorzugt zwischen 0,3 cm² und 1,2 cm², beispielsweise etwa 0,40 ± 0,05 cm², aufweisen. Gemäß einer alternativen bevorzugten Ausführung kann der Kopfabschnitt eine Fläche von 0,5 cm² bis 4 cm², vorzugsweise 0,6 cm² bis 1,5 cm², besonders bevorzugt zwischen 0,8 cm² und 1,2 cm², beispielsweise etwa 1,0 ± 0,05 cm ², aufweisen. Der Sensorkopfabschnitt kann insbesondere kleiner als 1,1 cm², 0,5 cm² oder kleiner als 0,25 cm² sein. Insbesondere kann der Kopfabschnitt rechteckig, insbesondere mit abgerundeten Seitenkanten, ausgebildet sein. Der Sensorkopfabschnitt kann beispielsweise bei einer rechteckförmigen Trägerplatte sowohl von dem Seitenrand der kürzeren Seite wie auch von dem Seitenrand der längeren Seite des Rechtecks hervorstehen. Für viele Anwendungen hat es sich als zweckmäßig erwiesen, dass der Sensorkopfabschnitt von dem Seitenrand der kürzeren Seite der rechteckförmigen Trägerplatte hervorsteht. Die Außenkontur des Tragekorpus, insbesondere der Trägerplatte, wie die Seite eines Polygons, insbesondere Rechtsecks, kann sich in einer bevorzugten Ausgestaltung um ein Vielfaches, beispielsweise um das mindestens drei-, mindestens fünf- oder mindestens zehnfache der Ausdehnung des Sensorkopfabschnitts, insbesondere entlang der Außenkontur, jenseits hiervon, zu einer oder zu beiden Seiten bei einer polygonalen, insbesondere rechteckigen Trägerplatte, erstrecken, bis die nächste Seite des Polygons bzw. Rechtecks beginnt. Die flächige, insbesondere auch polygonale, Außenkontur gestattet ein einfaches Einsetzen der Trägerplatte beispielsweise in eine Gebäudewand, etwa zwischen zwei seitlich nebeneinander angeordneten Steinen oder Platten oder an einem Balken. Eine Trägerplatte kann auch in Vertikalrichtung zwischen zwei Steinen, unter einem Balken, oder dergleichen angeordnet sein. Alternativ hierzu kann eine flache Trägerplatte gut in dem Zwischenraum zwischen der Gebäudehüllen und der Dämmschicht eines Gebäudehüllen-Dämmsystems angeordnet werden. Die Montage erfolgt vorzugsweise werkzeugfrei.

Gemäß einer Weiterbildung einer erfindungsgemäßen Sensorvorrichtung definiert die Außenkontur der Trägerplatte eine Ebene (X-Y), wobei die Trägerplatte quer zu der Ebene flach ist. Beispielsweise kann eine Trägerplatte mit rechteckgier Außenkontur durch ihre lange Seitenkante eine Y-Koordinatenrichtung definieren und durch ihre kurze Seitenkante eine X-Koordinatenrichtung definieren, die gemeinsam eine Ebene aufspannen. Senkrecht zu der Ebene der Trägerplatte ist die Erstreckung der Trägerplatte einschließlich der darauf angeordneten Funkelektronik flach, das heißt, die Erstreckung in Z-Richtung ist wesentlich geringer als die Erstreckung in X-Richtung und Y-Richtung. Vorzugsweise ist die Erstreckung in Z-Richtung wenigstens 5x kleiner, insbesondere wenigstens 10x kleiner als die Erstreckung in X-Richtung und/oder Y-Richtung. Beispielsweise kann die Trägerplatte in Z-Richtung kleiner als 10 mm, vorzugsweise kleiner als 5 mm, insbesondere etwa 3 mm dick sein. Eine flache, polygonale Trägerplatte hat sich als besonders geeignet zur Ausrüstung oder Nachrüstung eines Gebäudehüllen-Dämmsystems mit einer hygrothermischen Sensorvorrichtung erwiesen. Eine flache Trägerplatte lässt sich besonders gut in schmale Spalt-Freiräume, etwa zwischen einer Gebäudehüllen und einer Dämmplatte, einsetzen.

Gemäß einer bevorzugten Weiterbildung einer erfindungsgemäßen Sensorvorrichtung, die mit den vorherigen Ausführungen bzw. Weiterbildung kombinierbar ist, ist die Funkelektronik, vorzugsweise die Trägerplatte, von einer Umhüllung, wie einem Schrumpfschlauch, umgeben. Eine Umhüllung der Funkelektronik oder der vollständigen Trägerplatte einschließlich Funkelektronik verbessert die mechanische Robustheit der Sensorvorrichtung und schützt die elektrischen Bauteile gegen mechanische Schäden. Eine Umhüllung kann beispielsweise durch einen Verguss mit einem Kunststoff-Material oder dergleichen, vorzugsweise ein Epoxidharz, realisiert sein. Vorzugsweise schützt die Umhüllung die Trägerplatte bzw. die Funkelektronik gegen Wasser und/oder Wasserdampf.

Gemäß einer anderen Weiterentwicklung einer erfindungsgemäßen Sensorvorrichtung, die mit den vorherigen kombinierbar ist, umfasst die Funkelektronik eine (RFID-)Sende- und/oder Empfangsantenne, die vorzugsweise entlang der Tragplattenaußenkontur verläuft. Die Sende- und/oder Empfangsantenne ist vorzugsweis als Spulenantenne realisiert. Die Form der Sende- und/oder Empfangsantenne ist vorzugsweise an die Außenkontur derart angepasst, dass die Antenne eine der Außenkontur entsprechende polygonale Form, vorzugsweise mit abgerundeten Ecken, aufweist. Die Antenne kann auch rund, insbesondere oval oder kreisförmig sein und nahe der Außenkontur verlaufen. Auf diese Weise wird eine möglichst große Sende- und/oder Empfangsantenne bereitgestellt, die die von der Tragplatte bereitgestellte Fläche bestmöglich ausnutzt.

Bei einer bevorzugten Ausführung einer erfindungsgemäßen Sensorvorrichtung sind der Temperatur- und/oder Feuchte-Sensor (sowie gegebenenfalls weitere Sensoren, wie etwa ein Drucksensor) außerhalb einer von der (RFID-)Sende- und/oder Empfangsantenne der (RFID-)Transponder-Elektronik aufgespannten Fläche angeordnet. Durch die Anordnung der Sensoren, insbesondere des Temperatur- und/oder Feuchte-Sensors, auf dem Kopfabschnitt der Trägerplatte außerhalb der Fläche der Antenne wird eine Verfälschung des Messergebnisses vermieden.

Bei einer bevorzugten Ausführung einer erfindungsgemäßen Sensorvorrichtung wird von der Tragstruktur eine elektrische Energiequelle, vorzugsweise in Form einer Primärbatterie, also einer nicht wieder aufladbaren Batterie, oder eines wieder aufladbaren Akkumulators, zum Versorgen der Funkelektronik des Temperatursensors und/oder des Feuchtesensors von der Tragstruktur getragen. Bei dieser Ausführung weist die Sensorvorrichtung bevorzugt eine aktive Funkelektronik oder aktive Transponder-Elektronik auf. Hierbei kann in einer bevorzugten Ausgestaltung die aktive Transponder-Elektronik in einem Lese- oder Ladegerät mit einer Ladestandsanzeige integriert sein. Vorzugsweise ist der Akkumulator insbesondere mittels einer Funkelektronik, wie einer induktiven Aufladeelektronik oder dergleichen, kabellos wieder aufladbar. Alternativ kann der Akkumulator kabelgebunden durch eine sensorvorrichtungsferne elektrische Energiequelle, wie eine Solarzelle, wieder aufladbar sein. Die Verwendung eines Akkumulators erhöht die Lebensdauer einer aktiven Funkelektronik signifikant.

Die Verwendung einer elektrischen Energiequelle erlaubt die Verwendung leistungsstärkerer Mikroprozessoren, die beispielsweise zur Verarbeitung von Messdaten von dem Temperatur-Sensor und/oder dem Feuchtesensor verwendet werden kann. Alternativ oder zusätzlich kann die Energie der elektrischen Energiequelle der Sensorvorrichtung zur Erhöhung der Sendeleistung der Funkelektronik verwendet werden.

Gemäß einer anderen bevorzugten Ausführung, die mit der vorigen kombinierbar ist, weist die Sensorvorrichtung eine Analyseelektronik, wie einen Mikrocontroller, auf, wobei vorzugsweise die Analyseelektronik abhängig von dem Temperatur-Messwert einen Taupunkt bestimmen kann. Bei einer Weiterbildung kann die Sensorvorrichtung eine Analyseelektronik und einen Drucksensor umfassen, um mit einem Druck-Messwert des Drucksensors und dem Temperatur-Messwert des Temperatursensors eine präzisere Taupunkt-Bestimmung vorzunehmen. Indem die hygrothermische Sensorvorrichtung sogleich neben der relativen Luftfeuchte und der Temperatur auch den Taupunkt bestimmten kann, ist sie in der Lage, sogleich eine Aussage über besonders kritische hygrothermische Zustände bei einer Luftfeuchtigkeit nahe oder oberhalb einer gespeicherten temperatur- und/oder druckabhängigen Taupunktkurve zu erkennen. Bei Erkennen eines kritischen hygrothermischen Zustands kann dies durch die Funkelektronik umgehend ein Warnsignal oder Alarmsignal versandt werden.

Die Erfindung betrifft ferner eine Dämmplatte für ein Gebäudehüllen-Dämmsystem, wie ein Wärmedämmverbundsystem (WDVS) oder ein Innendämmsystem (IDS), mit einer erfindungsgemäßen Sensorvorrichtung. Vorzugsweise ist die Dämmplatte aus einem Naturstoff, vorzugsweise Naturfasern, wie Holzfasern, Hanffasern oder dergleichen gebildet oder umfasst einen solchen. Die Sensorvorrichtung kann insbesondere in eine Dämmplatte integriert sein, vorzugsweise mit einer vorbestimmten Anordnung und/oder Orientierung der Sensorvorrichtung, insbesondere des Sensorkopfabschnitts, relativ zu dem rechteckquaderförmigen Körper der Dämmplatte. Beispielsweise kann die von der Trägerplatte definierte Ebene planparallel oder orthogonal zu einer von der Dämmplatte, insbesondere einer zur Wandmontage der Dämmplatte vorgesehenen oder ausgestalteten Oberfläche der Dämmplatte, angeordnet orientiert sein. Die Sensorvorrichtung kann auf einer Oberfläche, beispielsweise der gebäudewandseitigen oder der gebäudeumgebungsseitigen Oberfläche, angeordnet sein. Der Sensorkopfabschnitt kann im Inneren der Dämmplatte oder an deren Oberfläche vorzugsweise nach außen ragend angeordnet sein. Insbesondere kann die Sensorvorrichtung, vorzugsweise einschließlich dem Sensorkopfabschnitt, im Inneren der Dämmplatte angeordnet sein, vorzugsweise vollständig eingebettet in das Dämmmaterial der Dämmplatte. Auf diese Weise kann unter Ausschluss von Montagefehlern eine besonders günstige Anordnung der Sensorvorrichtung sichergestellt sein. Es können unterschiedliche vorbestimmte Anordnungen vorgesehen sein, die speziell auf einzelne Messanforderungen zugeschnitten sind, beispielsweise für Messungen in einem Spalt in einem Gebäudehüllen-Dämmsystem oder für Messungen im Inneren einer Dämmplatte. Bevorzugt umfasst eine Dämmplatte mit Sensorvorrichtung eine passive Funkelektronik. Eine passive Funkelektronik, die vorzugsweise die elektrische Betriebsenergie für den Betrieb der Sensorvorrichtung insbesondere vollständig über ein von einem Lesegerät, erzeugtes elektromagnetisches Feld erhält, eignet sich besonders gut dazu, bereits während des Herstellungsprozesses in eine Dämmplatte integriert zu werden.

Die Erfindung betrifft auch ein Gebäudehüllen-Dämmsystem, wie ein Wärmedämmverbundsystem (WDVS), ein Innendämmsystem (IDS), ein Dachdämmsystem oder dergleichen, das eine Gebäudehülle, wie eine Gebäudewand und/oder ein Gebäudedach, eine an der Gebäudehüllen angebrachte Dämmschicht sowie wenigstens eine erfindungsgemäße hygrothermische Sensorvorrichtung umfasst, die in oder an der Gebäudehülle oder in oder an der Dämmschicht, vorzugsweise einer oben beschriebenen Dämmplatte, angeordnet ist. Ein Gebäudewand-Dämmsystem kann gegebenenfalls eine Armierungsschicht, eine Unterputzschicht und/oder eine Außenputzschicht aufweisen. Bei einem Wärmedämmverbundsystem kann eine Dämmschicht an der Außenseite einer Gebäudewand angeordnet sein. Auf der Dämmschicht eines Wärmedämmverbundsystems kann außenseitig eine Außenputzschicht aufgebracht sein oder gegebenenfalls eine Unterputzschicht mit einer darauf außenseitig angebrauchten Außenputzschicht. Bei einem Dachdämmsystem kann außenseitig auf der Dämmschicht die Dachabdeckung, beispielsweise Dachziegeln oder dergleichen, angeordnet sein. Ein Innendämmsystem umfasst eine Gebäudewand mit innenseitig angebrachter Dämmschicht sowie gegebenenfalls eine außenseitig angebrachte Unterputz- und/oder Außenputzschicht.

Gemäß einer bevorzugten Weiterbildung eines erfindungsgemäßen Gebäudehüllen-Dämmsystems umfasst dieses wenigstens eine hygrothermische Sensorvorrichtung, deren Tragstruktur, insbesondere deren Trägerplatte, parallel zur Gebäudehülle und/oder parallel zur Dämmschicht orientiert ist. Vorzugsweise ist die wenigstens eine Tragstruktur, insbesondere die Trägerplatte, an der Innenseite und/oder an der Außenseite des Gebäudehüllen-Dämmsystems angeordnet und/oder zwischen der Gebäudehüllen und der Dämmschicht, Gemäß einer alternativen Weiterbildung des Gebäudehüllen-Dämmsystems, die bei Verwendung mehrerer, insbesondere wenigstens zweier, erfindungsgemäßer hygrothermischer Sensorvorrichtungen mit der vorherigen kombinierbar ist, ist wenigstens eine hygrothermische Sensorvorrichtung vorgesehen, deren Tragstruktur, insbesondere deren Trägerplatte, quer, vorzugsweise senkrecht, zu der Gebäudehülle und/oder der Dämmschicht orientiert ist. Vorzugsweise ist die Tragstruktur, insbesondere die Trägerplatte, zumindest teilweise, vorzugsweise vollständig, innerhalb der Gebäudehülle und/oder innerhalb der Dämmschicht angeordnet.

Gemäß einer bevorzugten Ausführung eines Gebäudehüllen-Dämmsystems ist die wenigstens eine Sensorvorrichtung derart in dem Gebäudehüllen-Dämmsystem angeordnet, dass der Sensorkopfabschnitt von der Tragstruktur in Richtung Gebäudeaußenseite hervorsteht. So erreicht von außen in das Gebäudehüllen-Dämmsystem eindringende Feuchte unverfälscht den Temperatur- und/oder Luftfeuchtesensor.

Die Erfindung betrifft auch eine Holzdeckenanordnung für ein Gebäude mit wenigstens zwei Gebäudehüllabschnitten, wie Gebäudewandabschnitten oder Gebäudedachabschnitten, umfassend wenigstens einem Holzbalken zum Tragen einer Holzdecke, der einen Befestigungsabschnitt aufweist, der tragfähig in eine Aufnahme, wie eine vorzugsweise quaderförmige Aussparung, eines der Gebäudehüllabschnitte einsetzbar ist. Der Befestigungsabschnitt des Holzbalkens ist vorzugsweise durch sein stirnseitiges Ende gebildet, das als Holzbalkenkopf bezeichnet sein kann. Der Befestigungsabschnitt des Holzbalkens erstreckt sich zum Tragen der Holzdecke in oder durch den Gebäudehüllabschnitt, insbesondere die Gebäudewand. Die Holzdeckenanordnung umfasst ferner wenigstens eine erfindungsgemäße Sensorvorrichtung, die derart an dem Holzbalken angeordnet, insbesondere befestigt, ist, dass der Sensorkopfabschnitt an dem Befestigungsabschnitt angeordnet ist. Der Sensorkopfabschnitt kann in den Holzbalken, vorzugsweise den Holzbalkenkopf, integriert sein. Vorzugsweise ist der Sensorkopfabschnitt relativ zur Längserstreckungsrichtung des Holzbalkens in Horizontalrichtung seitlich an dem Befestigungsabschnitt angeordnet oder relativ zur Längserstreckungsrichtung des Holzbalkens in Horizontalrichtung stirnseitig des als Holzbalkenkopf ausgeführten Befestigungsabschnitts angeordnet. Alternativ kann der Sensorkopfabschnitt auch in Vertikalrichtung oberhalb oder unterhalb des Holzbalkens angeordnet werden. Vorzugsweise ist der Sensorkopfabschnitt in einem zwischen dem Gebäudehüllabschnitt und dem Holzbalken vorhandenen Spaltbereich der Aufnahme angeordnet. Die Erfindung betrifft auch ein Gebäude mit mehreren Gebäudehüllabschnitten, wie Gebäudewänden und/oder Gebäudedachabschnitten, und wenigstens einer Holzdeckenanordnung, die mittels mehrerer 1-Tolzbalken von je wenigstens zwei Gebäudehüllabschnitten, wie Gebäudewänden, getragen ist, wobei wenigstens einer der Holzbalken wie oben beschrieben mit einer Sensorvorrichtung ausgestattet ist.

Bevorzugte Ausführungen sind in den Unteransprüchen angegeben.

Weitere Vorteile, Eigenschaften und Merkmale der Erfindung werden durch die folgende Beschreibung einer bevorzugten Ausführung der Erfindung und der beiliegenden Zeichnungen deutlich, in denen zeigen:
- Fig. 1: eine schematische Ansicht einer erfindungsgemäßen hygrothermischen Sensorvorrichtung zum Erfassen von Luftfeuchte- und Temperatur-Messdaten;
- Fig. 2: eine schematische Querschnittsansicht eines Wärmedämmverbundsystems mit drei darin an unterschiedlichen Positionen angeordneten erfindungsgemäßen hygrothermischen Sensorvorrichtungen; und
- Fig. 3: eine schematische Ansicht einer Dämmschicht mit zwei relativ zu der Dämmschicht unterschiedlich angeordneten erfindungsgemäßen hygrothermischen Sensorvorrichtungen.

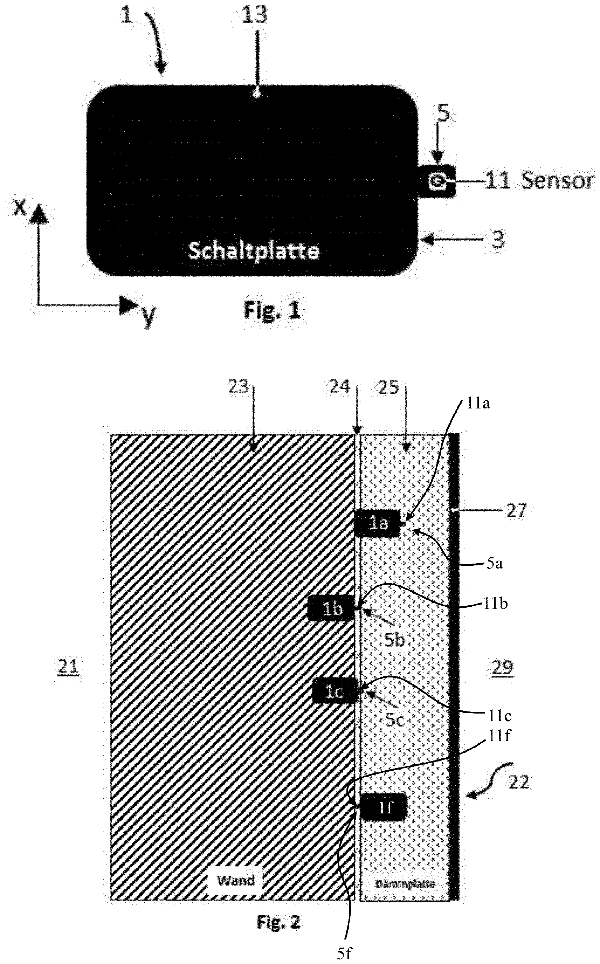

In Figur 1 ist die erfindungsgemäße hygrothermische Sensorvorrichtung im Allgemeinen mit der Bezugsziffer 1 versehen. Als Hauptkomponenten umfasst die Sensorvorrichtung 1 eine Tragstruktur 3 mit seitlich hervorstehendem Kopfabschnitt 5, auf dem ein kombinierter Temperatur- und Feuchtesensor 11 angeordnet ist.

Die Tragstruktur 3 umfasst eine rechteckige Trägerplatte 13, von welcher der Sensorkopfabschnitt 5 hervorsteht. Die Trägerplatte 13 ist in dem in Figur 1 abgebildeten Beispiel als Elektronikplatine realisiert und trägt eine nicht näher dargestellte RFID-Transponder-Elektronik. Die RFID-Transponder-Elektronik umfasst eine RFID-Sende- und/oder Empfangsantenne. Alternativ kann die RFID-Transponder-Elektronik gesondert wenigstens eine Empfangsantenne und wenigstens eine Sendeantenne aufweisen. Ferner kann die RFID-Transponder-Elektronik einen Energiespeicher, wie eine Primärbatterie oder einen Akkumulator sowie einen Mikrochip bzw. einen Mikrocontroller umfassen (nicht näher dargestellt). RFID-Transponder-Elektronik mit Batterie und Mikroprozessor werden in der Regel als aktive RFID-Transponder bezeichnet.

Die Trägerplatte 13 hat die Form eines Rechtecks mit einer kurzen Seitenkante von etwa 4 cm Länge und eine lange Seitenkante von etwa 8 cm Länge. Die kurze Seitenkante definiert eine X-Achse und die lange Seitenkante eine dazu senkrechte Y-Achse. Senkrecht zur ebenen Erstreckung der Trägerplatte bzw. zu den X- und Y-Achsen erstreckt sich eine Z-Achse. In Richtung der Z-Achse ist die Trägerplatte 13 flach. Der Sensorkopfabschnitt 5 ist an der kurzen Seitenkante etwa mittig angebracht und erstreckt sich 0,5 cm bis 2 cm, beispielsweise 0,8 cm oder weniger, von der Trägerplatte 13 vor in Richtung parallel zu der langen Kante der Trägerplatte.

Die Tragstruktur umfasst zwei Kompartimente, von denen das eine durch die Trägerplatte 13 gebildet ist, auf der die RFID-Transponder-Elektronik angeordnet ist, und von denen das zweite durch den wenigstens einen Sensorkopfabschnitt 5 gebildet ist, der den Sensor 11 trägt. Der Temperatur- und/oder der Feuchtesensor 11 weist eine diffusionsoffene Abdeckung auf. Es sei klar, dass mehrere Sensorkopfabschnitte nebeneinander an derselben Kante der Trägerplatte 13 oder dass mehrere Sensorkopfabschnitte an jeweils Kante der polygonalen Trägerplatte angeordnet sein können. Es können auch mehrere unterschiedliche Sensoren anstelle eines kombinierten Luftfeuchte- und Temperatursensors auf ein und demselben Sensorkopfabschnitt 5 angeordnet sein. Von der Trägerplatte 13 seitlich hervorstehende Sensorkopfabschnitte 5 ermöglichen den darauf angeordneten Sensoren 11 eine von der Trägerplatte und der RFID-Transponder-Elektronik unverfälschte Messung insbesondere von Temperatur und relativer Luftfeuchte. Weitere Sensoren, beispielsweise ein Sensor für die Messung des Luftdrucks, können ebenfalls vorgesehen sein.

Die Messdaten des Temperatursensors und/oder des Luftfeuchtesensors 11 sowie eventuell weitere vorhandene Sensoren können mittels der RFID-Transponder-Elektronik kabellos an ein RFID-Lesegerät übermittelt werden. Die Auswertung der Sensor-Messdaten kann entweder durch einen Mikrocontroller der hygrothermischen Sensorvorrichtung selbst oder durch eine Rechnereinheit in der RFID-Leseeinheit oder durch einen mit einer RFID-Leseeinheit verbundenen Computer realisiert sein.

Figur 2 zeigt ein Wärmedämmverbundsystem 22 eines Gebäudes. Ausgehend von der Innenseite 21 des Gebäudes umfasst das Wärmedämmverbundsystem zunächst eine Gebäudewand 23, an deren Außenseite als Dämmschicht eine Dämmplatte 25 angeordnet ist. Außen an der Dämmplatte 25 ist eine Außenputzschicht 27 aufgebracht, um die Dämmplatte vor unmittelbarer Einwirkung von Witterungseinflüssen der Umgebung 29, beispielsweise Regen, zu schützen. Zwischen der Dämmplatte 25 und der Außenputzschicht 27 kann eine Unterputzschicht (nicht näher dargestellt) vorgesehen sein.

In dem Wärmedämmverbundsystem 22 gemäß Figur 2 sind schematisch an unterschiedlichen Stellen drei erfindungsgemäße hygrothermische Sensorvorrichtungen 1a, 1b und 1c angeordnet. Durch den Einsatz mehrerer Sensorvorrichtungen, beispielsweise innerhalb des Luftspalts 24 und/oder an bzw. unter einer Klebeschicht zum Befestigen einer Dämmplatte 25 an einer Gebäudewand und/oder an bzw. unter der Außenputzschicht 27 und/oder einer Innenputzschicht, kann ein Temperatur- und/oder Feuchteverlauf durch ein Wärmedämmverbundsystem gemessen werden. Eine (nicht dargestellte) Klebeschicht kann eine Seitenfläche einer Dämmplatte (25) vollständig bedecken. Vorzugsweise bedeckt die Klebeschicht die Dämmplatte (25) teilweise, beispielsweise streifen- und/oder schlangenförmig. Der Kleber zum Erzeugen der Klebeschicht zum Befestigen einer Dämmplatte beispielsweise an einer Gehäusewand kann beispielsweise ein mineralischer Kleber oder ein organischer Kleber, vorzugsweise auf Polyurethanbasis, sein. Es ist gut zu erkennen, dass die Anordnung der Sensorvorrichtung 1a, 1b und 1c derart gewählt ist, dass der Sensorkopfabschnitt 5a, 5b bzw. 5c in Richtung nach außen zur Gebäudeumgebung 29 hin orientiert ist. Da Feuchtigkeit in Gebäuden in der Regel von außen eindringt, erlaubt eine derartige Anordnung einer hygrothermischen Sensorvorrichtung eine besonders präzise Messung des hygrothermischen Zustands am Ort des jeweiligen auf dem jeweiligen Sensorkopf 5a, 5b bzw. 5c angeordneten kombinierten Luftfeuchte- und Temperatursensors, ohne Verfälschung des Temperatur- und Feuchte-Verlaufs durch das Wärmedämmverbundsystem 22 durch die Trägerplatte (13) der jeweiligen Sensorvorrichtungen 1a, 1b oder 1c.

Die oben angeordnete Sensorvorrichtung la ist mit ihrer Trägerplatte 13 größtenteils innerhalb der Dämmplatte 25 angeordnet. Ihr Sensorkopfabschnitt 5a mit dem darauf angebrachten Temperatur- und Luftfeuchte-Sensor den hygrothermischen Zustand ist zum Messen nahe der Mitte der Dämmplatte 25 positioniert. Die Randkante der Trägerplatte des Sensors 1a, welche gegenüber zu dem Sensorkopfabschnitt 5a verläuft, ist am äußeren Rand der Gebäudewand 23 angeordnet und kann an der Gebäudewand 23 befestigt sein.

Die mittlere hygrothermische Sensorvorrichtung 1b hat eine Trägerplatte (13), die im Wesentlichen vollständig in die Gebäudewand 23 eingebettet ist. Dies kann beispielsweise dadurch erfolgen, dass die Trägerplatte einer hygrothermischen Sensorvorrichtung 1b zwischen benachbarten Bausteinen eingesetzt ist. Der Sensorkopfabschnitt 5b der Sensorvorrichtung 1b befindet sich angrenzend zur Außenseite der Gebäudewand 23 in einem Spalt 24 zwischen der Gebäudewand 23 und der Dämmplatte 25. Derartige Luftspalte 24 können vor allem bei Altbauten, die nachträglich mit Dämmplatten 25 ausgestattet werden, vorhanden sein und sind besonders anfällig für das Ausfallen von Kondenswasser. Das Anordnen der Temperatur- und Feuchtsensoren der hygrothermischen Sensorvorrichtung 1b innerhalb des Luftspalts 24 zwischen der Gebäudewand 23 und der Dämmplatte 25 erlaubt eine direkte Messung des hygrothermischen Zustands innerhalb des Luftspalts 24 und erlaubt es auf diese Weise, durch Auslesen der Sensordaten durch ein (nicht abgebildetes) RFID-Lesegerät von innerhalb des Gebäudes 21 oder von außerhalb 29 festzustellen, ob in dem Luftspalt 24 ein hygrothermisch kritischer Zustand vorliegt, der eine Sanierung erforderlich macht.

Die untere Sensorvorrichtung 1 c hat eine Trägerplatte, die zum großen Teil innerhalb der Gebäudewand 23 eingebettet ist, wobei der auf dem Sensorkopfabschnitt 5 der Sensorvorrichtung 1c angeordnete Luftfeuchte - und Temperatur-Sensor in die Dämmplatte 25 hineinragt und kann eine derart angeordnete Sensorvorrichtung 1c im hygrothermischen Zustand an der Innenseite der Dämmplatte 25 erfassen.

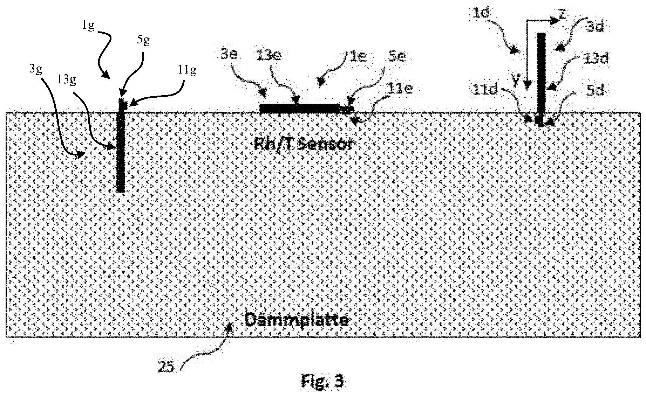

Figur 3 zeigt eine schematische Seitenansicht einer Dämmplatte 25 mit zwei relativ zu der Dämmplatte unterschiedlich orientierten hygrothermischen Sensorvorrichtungen 1d und 1e. Wie bei den oben bezüglich Figur 2 beschriebenen Sensorvorrichtungen ist die in Figur 3 abgebildete hygrothermische Sensorvorrichtung 1d senkrecht relativ zu der Dämmplatte 25 orientiert. Wie bei der Sensorvorrichtung 1c gemäß Figur 2 erstreckt sich bei der hygrothermischen Sensorvorrichtung 1d nur der Sensorkopfabschnitt 5d der Trägerplatte 3d in die Dämmplatte 25 hinein.

Die hygrothermische Sensorvorrichtung 1e ist planparallel zu der Dämmplatte 25 an deren Innenseite angeordnet. Die Tragstruktur 13e ist an der Außenseite der Dämmplatte 25 angebracht. Beispielsweise kann die Tragstruktur 3e auf die Dämmplatte 25 geklebt sein. Der kombinierte Luftfeuchte- und Temperatur-Sensor 11e der Sensorvorrichtung 1e steht von dem Sensorkopfabschnitt 5e der Tragstruktur 3 hervor und ragt in die Dämmplatte 25 hinein. Die parallele Anbringung der Tragstruktur 3e an der Dämmplatte 25 kann insbesondere bei Dämmplatten 25 mit Naturstoffdämmung (wie eine Dämmung aus nachwachsenden Rohstoffen), wie eine Naturfaserdämmung, beispielsweise eine Holz-, Leinen-, Bast- (z.B. Rohrkolben, Brennesseln oder dergleichen) oder Hanffaserdämmung, eine Strohdämmung oder dergleichen, von Vorteil sein, weil sie nicht die Dämmplatte 25 eindrückt, was eine nachteilige Auswirkung der Dichte der Dämmplatte und dadurch ihren Dämmwert zur Folge hätte. Aus diesem Grund sind die Tragstruktur, insbesondere die Trägerplatte und der Sensorkopfabschnitt 3 derart flach ausgestattet, dass die Dicke der Tragstruktur nur wenige Millimeter, vorzugsweise 5 mm oder weniger, beispielsweise etwa 3 mm oder weniger beträgt.

Der Temperatursensor und/oder der Feuchtesensor 11 kann, wie in Figur 3 abgebildet, relativ zu der flächigen Erstreckung der Tragstruktur 3 und insbesondere deren Trägerplatte 13 über die Dicke der Trägerplatte 13 hervorstehen. Vorzugsweise ist die Gesamtdicke einer Sensorvorrichtung 1 einschließlich RFID-Transponder-Elektronik und Sensor(en) kleiner als 10 mm, vorzugsweise kleiner als 5 mm.

In den Figuren 2 und 3 ist außerdem je eine hygrothermische Sensorvorrichtung 1f bzw. 1g abgebildet, deren Tragstruktur in der Dämmplatte 25 eingebettet ist und deren Sensorkopfabschnitt 5f bzw. 5g in den Spalt 24 zwischen der Dämmplatte 25 und der Gebäudewand 23 hineinragt, um die Temperatur, Luftfeuchte und gegebenenfalls den Luftdruck im Bereich des Spalts 24 zu messen.

## Patentansprüche

1. Hygrothermische Sensorvorrichtung (1) zum Erfassen von Luftfeuchte- und/oder Temperatur-Messdaten in einem Gebäudehüllen-Dämmsystem, wie einem Wärmedämmverbundsystem (22), einem Innendämmsystem, einem Dachdämmsystem oder dergleichen, umfassend:
- einen Temperatursensor und/oder einen Feuchtesensor;
- eine Funkelektronik, wie eine RFID-Transponder-Elektronik, zum Übermitteln von Sensordaten an ein Lesegerät, wie ein RFID-Lesegerät,
**dadurch gekennzeichnet, dass** die Sensorvorrichtung (1) ferner umfasst
- eine den Temperatur- und/oder Feuchtesensor und die Funkelektronik tragende Tragstruktur (3) zum Einbetten in das Gebäudehüllen-Dämmsystem, wobei die Tragstruktur (3) einen hervorstehenden Sensorkopfabschnitt (5) aufweist, an dem der Temperatur- und/oder der Feuchtesensor angeordnet ist, und
- einen auf der Tragstruktur (3) angeordneten Drucksensor, wobei der Drucksensor an dem Sensorkopfabschnitt (5) angeordnet ist.

2. Sensorvorrichtung nach Anspruch 1, wobei die Tragstruktur (3) einen Tragkorpus aufweist mit einer Außenkontur, von der der Sensorkopfabschnitt (5) hervorsteht, und/oder wobei die Tragstruktur (3) einen Tragekorpus, insbesondere eine Trägerplatte (13), wie eine Platine, aufweist, der/die eine polygonale, vorzugsweise rechteckige, Außenkontur besitzt oder umfasst, wobei die Funkelektronik zumindest teilweise auf oder an dem Tragekorpus, insbesondere der Trägerplatte (13), angeordnet ist, und/oder wobei vorzugsweise der Sensorkopfabschnitt (5) seitlich von der Außenkontur der Trägerplatte (13) hervorsteht.

3. Sensorvorrichtung (1) nach Anspruch 2, wobei die Außenkontur der Trägerplatte (13) eine Ebene aufspannt, wobei die die Trägerplatte (13) senkrecht zu der Ebene kleiner als 10 mm, vorzugsweise kleiner 5 mm, dick ist.

4. Sensorvorrichtung (1) nach einem der vorangehenden Ansprüche, **dadurch gekennzeichnet, dass** die Funkelektronik eine RFID Sende- und/oder Empfangsantenne umfasst, die vorzugsweise entlang der Tragplatten-Außenkontur verläuft.

5. Sensorvorrichtung (1) nach einem der vorstehenden Ansprüche, **dadurch gekennzeichnet, dass** der Temperatur- und/oder der Feuchtesensor außerhalb einer von einer Sende- und/oder Empfangsantenne der Funkelektronik aufgespannten Fläche angeordnet ist.

6. Sensorvorrichtung (1) nach einem der vorstehenden Ansprüche, **dadurch gekennzeichnet, dass** eine elektrische Energiequelle, vorzugsweise eine Primärbatterie oder ein Akkumulator, zum Versorgen der insbesondere aktiven Funkelektronik, des Temperatursensors und/oder Feuchtesensors von der Tragstruktur (3) getragen wird, wobei vorzugsweise der Akkumulator insbesondere mittels einer insbesondere aktiven Funkelektronik einer induktiven Autladeelektronik oder dergleichen, kabellos wiederaufladbar ist oder kabelgebunden durch eine sensorvorrichtungsferne elektrische Energiequelle, wie eine Solarzelle, wiederaufladbar ist.

7. Sensorvorrichtung (1) nach einem der vorstehenden Ansprüche, **dadurch gekennzeichnet, dass** die Sensorvorrichtung eine Analyseelektronik, wie ein Mikrocontroller, aufweist, wobei vorzugsweise die Analyseelektronik ausgelegt und eingerichtet ist, abhängig von einem Temperatur-Messwert einen Taupunkt zu bestimmen.

## Claims

1. A hygrothermal sensor device (1) for detecting air humidity and/or temperature measurement data in a building envelope insulation system such as an external thermal insulation composite system (22), an internal insulation system, a roof insulation system or the like, comprising:
- a temperature sensor and/or a humidity sensor;
- radio electronics such as RFID transponder electronics for transmitting sensor data to a reader such as a RFID reader;
**characterized in that** the sensor device (1) further comprises
- a supporting structure (3) supporting the temperature and/or humidity sensor and the radio electronics for embedding in the building envelope insulation system, wherein the supporting structure (3) has a protruding sensor head portion (5), on which the temperature and/or the humidity sensor is arranged, and
- a pressure sensor arranged on the supporting structure (3), wherein the pressure sensor is arranged on the sensor head portion (5).

2. The sensor device according to Claim 1, wherein the supporting structure (3) has a supporting body having an outer contour, from which the sensor head portion (5) protrudes, and/or wherein the supporting structure (3) has a supporting body, in particular a supporting plate (13), such as a printed circuit board, which has or comprises a polygonal, preferably rectangular, outer contour, wherein the radio electronics are at least partially arranged on or at the supporting body, in particular the supporting plate (13), and/or wherein the sensor head portion (5) preferably protrudes laterally from the outer contour of the supporting plate (13).

3. The sensor device (1) according to Claim 2, wherein the outer contour of the supporting plate (13) spans a plane, wherein the supporting plate (13) perpendicular to the plane is less than 10 mm, preferably less than 5 mm, thick.

4. The sensor device (1) according to any one of the preceding claims, **characterized in that** the radio electronics comprise a RFID transmitting and/or receiving antenna which preferably runs along the supporting plate outer contour.

5. The sensor device (1) according to any one of the preceding claims, **characterized in that** the temperature and/or the humidity sensor is arranged outside an area spanned by a transmitting and/or receiving antenna of the radio electronics.

6. The sensor device (1) according to any one of the preceding claims, **characterized in that** an electrical energy source, preferably a primary battery or an accumulator, for supplying the in particular active radio electronics, the temperature sensor and/or humidity sensor is supported by the supporting structure (3), wherein the accumulator can preferably be recharged wirelessly, in particular by means of in particular active radio electronics, inductive recharging electronics or the like, or can be recharged in a wired manner by an electrical energy source which is remote from the sensor device such as a solar cell.

7. The sensor device (1) according to any one of the preceding claims, **characterized in that** the sensor device has analysis electronics such as a microcontroller, wherein the analysis electronics are preferably designed and set up to determine a dew point depending on a measured temperature value.

## Revendications

1. Dispositif de détection (1) hygrothermique destiné à enregistrer des données de mesure d'humidité de l'air et/ou de température dans un système isolant d'enveloppe de bâtiment, tel qu'un système d'isolation thermique composite (22), un système d'isolation intérieure, un système d'isolation de toit ou similaire, comprenant :
- un capteur de température et/ou un capteur d'humidité ;
- un équipement radioélectronique, telle qu'un équipement électronique de transpondeur RFID, destiné à transmettre des données de capteur à un appareil de lecture, tel qu'un appareil de lecture RFID ;
**caractérisé en ce que** le dispositif de détection (1) comprend en outre
- une structure de support (3) portant le capteur de température et/ou d'humidité et l'équipement radioélectronique, destinée à être incorporée dans le système isolant d'enveloppe de bâtiment, la structure de support (3) comportant une partie de tête pour capteur (5) en saillie, sur laquelle est disposée le capteur de température et/ou d'humidité, et
- un capteur de pression disposé sur la structure de support (3), le capteur de pression étant disposé sur la partie de tête pour capteur (5).

2. Dispositif de détection selon la revendication 1, la structure de support (3) comportant un corps de support doté d'un contour extérieur duquel dépasse la partie de tête pour capteur (5), et/ou la structure de support (3) comportant un corps de support, en particulier une plaque de support (13), telle qu'une platine, qui possède ou comprend un contour extérieur polygonal, de préférence rectangulaire, l'équipement radioélectronique étant disposé au moins en partie sur ou contre le corps de support, en particulier la plaque de support (13), et/ou la partie de tête pour capteur (5) dépassant de préférence latéralement du contour extérieur de la plaque de support (13).

3. Dispositif de détection (1) selon la revendication 2, le contour extérieur de la plaque de support (13) définissant un plan, l'épaisseur de la plaque de support (13), perpendiculairement au plan, étant inférieure à 10 mm, de préférence inférieure à 5 mm.

4. Dispositif de détection (1) selon l'une quelconque des revendications précédentes, **caractérisé en ce que** l'équipement radioélectronique comprend une antenne d'émission et/ou de réception RFID, qui s'étend de préférence le long du contour extérieur de la plaque de support.

5. Dispositif de détection (1) selon l'une quelconque des revendications précédentes, **caractérisé en ce que** le capteur de température et/ou d'humidité est disposé en dehors d'une surface définie par une antenne d'émission et/ou de réception de l'équipement radioélectronique.

6. Dispositif de détection (1) selon l'une quelconque des revendications précédentes, **caractérisé en ce qu'**une source d'énergie électrique, de préférence une batterie primaire ou un accumulateur, destinée à alimenter l'équipement radioélectronique en particulier actif, le capteur de température et/ou le capteur d'humidité, est portée par la structure de support (3), l'accumulateur étant de préférence rechargeable sans câble, en particulier au moyen d'un équipement radioélectronique en particulier actif, un équipement électronique de recharge par induction ou similaire, ou étant rechargeable par câble par une source d'énergie électrique se trouvant à distance du dispositif de détection, telle qu'une cellule solaire.

7. Dispositif de détection (1) selon l'une quelconque des revendications précédentes, **caractérisé en ce que** le dispositif de détection présente un équipement électronique d'analyse, tel qu'un microcontrôleur, l'équipement électronique d'analyse étant de préférence conçu et configuré pour déterminer un point de rosée en fonction d'une valeur de mesure de la température.
